# EUROPÄISCHE PATENTSCHRIFT

(11) **EP 3 339 743 B1**
(45) Veröffentlichungstag und Bekanntmachung des Hinweises auf die Patenterteilung: **13.10.2021**
(21) Anmeldenummer: 17208152.3
(22) Anmeldetag: 18.12.2017
(51) Int. Cl.: F24C 7/08, A47J 37/06, A23L 5/10

(54) **VERFAHREN ZUM GAREN VON GARPRODUKTEN**
METHOD FOR COOKING COOKING PRODUCTS
PROCÉDÉ DE CUISSON DES PRODUITS

(30) Priorität: 20.12.2016 DE 102016225612
(43) Veröffentlichungstag der Anmeldung: 27.06.2018
(73) Patentinhaber: WELBILT Deutschland GmbH, 82436 Eglfing (DE)
(72) Erfinder: Schilling, Michael, 82380 Peißenberg (DE)
(74) Vertreter: Hoefer & Partner Patentanwälte mbB

(56) Entgegenhaltungen:
- EP-A1- 2 363 646
- DE-A1- 4 216 718
- DE-A1-102008 028 027
- DE-A1-102011 051 060
- DE-A1-102014 103 480
- DE-A1-102014 217 476
- DE-U1-202011 000 009

## Beschreibung

Die Erfindung betrifft ein Verfahren zum Garen von Garprodukten gemäß Anspruch 1.

Verfahren zum Durchführen von Garprozessen sind aus der DE 10 2011 109 308 A1, der DE 10 2011 000 291 A1, der DE 10 2014 103 480 A1, der DE 10 2010 037 388 A1, DE 10 2014 217 476 A1, DE 42 16 718 A1, DE 20 2011 000 009 U1, DE 10 2008 028 027 A1, DE 10 2011 051 060 A1 und EP 2 363 646 A1 bekannt.

Im Rahmen der Erfindung durchgeführte Untersuchungen haben ergeben, dass eine Vielzahl von Garprodukten unterschiedliche Gar-Charakteristika haben, die insbesondere einen kritischen Garzustand umfassen. Ein kritischer Garzustand kann zum Beispiel eine Zeitspanne bei einer bestimmten Temperatur und/oder einem bestimmten Feuchtigkeitsgrad sein, die erforderlich ist, um das jeweilige Gargut perfekt zubereiten zu können. Als ein Beispiel hierfür kann die Zubereitung von Semmeln (Brötchen) genannt werden, die am Ende ihres Garprozesses eine Aussetzung einer bestimmten Temperatur ohne Unterbrechung benötigen, um die gewünschte Färbung und den knusprigen Zustand ihrer Oberseite erreichen zu können.

Wird dieser kritische Garzustand nicht eingehalten, kann es sogar dazu kommen, dass das jeweilige Gargut so geschädigt wird, dass es entsorgt werden muss.

Es ist daher Aufgabe der vorliegenden Erfindung, ein Verfahren zum Garen von Garprodukten zu schaffen, mit dem es auf einfache und zuverlässige Art und Weise möglich ist, auch Gargüter, die einen kritischen Garzustand haben, auf korrekte Art und Weise zuzubereiten. Insbesondere gilt dies für das parallele Garen mehrerer und zudem unterschiedlicher Garprodukte mit ebenfalls unterschiedlichen Beladungs- und Entnahmezeitpunkten.

Die Lösung dieser Aufgabe erfolgt durch die Merkmale des Anspruchs 1.

Eine besonders bevorzugte Maßnahme zur Verhinderung einer Unterbrechung des kritischen Garzustandes ist die Sperrung des Zugangs zu den zu garenden Garprodukten, beispielsweise durch eine Verriegelung der Garraumtür eines Gargeräts, in dem das erfindungsgemäße Verfahren durchgeführt wird.

Als Alternative zur Sperrung des Zugangs zu den zu garenden Garprodukten ist es auch möglich, die Verhinderung der Unterbrechung des kritischen Garzustands durch eine Sperrung der Auswahlmöglichkeit an einer Anzeige- und/oder Eingabeeinrichtung des Gargerätes zu erreichen, indem die zu garenden Garprodukte behandelt werden. Die Sperrung der Auswahlmöglichkeit bedeutet hierbei, dass das Gargerät anzeigt, dass weitere, noch nicht im Garraum befindliche Garprodukte, die vom Prinzip her in den Garraum eingebracht werden können, aufgrund des Erreichens des kritischen Garzustandes nicht in den Garraum eingebracht werden dürfen und beispielsweise zusätzlich, wie lange diese Sperrung anhält.

Die Bestimmung des kritischen Garzustandes kann erfindungsgemäß entweder automatisch oder manuell oder sowohl automatisch als auch manuell erfolgen.

Die manuelle Bestimmung ist hierbei beispielsweise die Eingabe einer Zeitspanne für den kritischen Garzustand, wie zum Beispiel bei Semmeln eine Endphase von 3 Minuten bei einer Gesamtgardauer von 30 Minuten. Eine teilmanuelle Bestimmung kann dadurch ausgeführt werden, dass eine Prozentzahl, wie beispielsweise 5 %, als ein Standardwert für alle im Gargerät hinterlegten Rezepte eingegeben wird, wobei dann je nach Garrezept das Gargerät die tatsächliche Zeitdauer anhand der Gesamtdauer der jeweiligen hinterlegten Rezepte bestimmt, so dass bei dieser teilmanuellen Bestimmung für den kritischen Garzustand unterschiedliche Zeitwerte resultieren können. In diesem Zusammenhang ist hervorzuheben, dass der kritische Garzustand nicht immer nur die Endphase eines Garprozesses ist, sondern durchaus auch zu anderen Zeitpunkten und ebenfalls mehrfach während des Verlaufs eines Garprozesses einsetzen und wieder enden kann.

Eine automatische Bestimmung, die durch das Gargerät durchgeführt wird, und die im Gargerät durch entsprechende Programmierung vorgesehen sein kann, kann anhand üblicher Garparameter, wie beispielsweise Temperatur, Garzeit, Feuchte, Beschickungsmenge, Gar-Charakteristika, Gargutart, Gargutgröße, Gargutgewicht oder zu erreichende nötige Kerntemperatur, den kritischen Garzustand, seinen Beginn, seine Dauer und damit sein Ende selbsttätig bestimmen. Das Anzeigen von weiteren zu den bereits im Gargerät befindlichen Garprodukten passenden Garprodukten bzw. das Ausblenden von Rezepten, die nicht zu den bereits im Garraum befindlichen Garprodukten passen, kann gemäß den Prinzipien der EP 1 798 479 B2 erfolgen, deren Offenbarung vollinhaltlich hiermit durch Bezugnahme zum Offenbarungsgehalt vorliegender Anmeldung gemacht wird.

Gemäß Anspruch 1 betrifft die Erfindung ein Verfahren zum Garen von Garprodukten mit zueinander passenden Gar-Charakteristika, bei dem bereits vor einer Beschickung des Gargerätes bestimmt wird, ob zur Beschickung ausgewählte Garprodukte einen kritischen Garzustand haben und die ausgewählten Garprodukte einander nicht ausschließen und ebenfalls kompatibel mit eventuell schon im Gargerät vorhandenen Garprodukten sind.

Dieses Verfahren weist als ersten Verfahrensschritt das Auswählen von Garprodukten aus, die in den Garraum eines Gargerätes eingebracht und gegart werden sollen. Ein derartiges Auswählen kann beispielsweise am Gerät durch Betätigen von den Garprodukten entsprechenden Garprogrammtasten erfolgen.

Nach diesem Schritt des Auswählens wird, geräteseitig und automatisch, bestimmt, ob die ausgewählten Garprodukte einen kritischen Garzustand haben.

Falls dies der Fall ist, wird bestimmt, ob für den Fall, dass die ausgesuchten Garprodukte dem Garprozess zugeführt werden, keine Unterbrechung aller im Gargerät garenden bzw. zu garenden Garprodukte in deren kritischen Bereichen, falls vorhanden, erfolgt (z.B. durch Türöffnung bei Entnahme eines der Produkte / d.h. ein neu hinzugefügtes und/oder schon im Gargerät vorhandenes Garprodukt endet im kritischen Bereich eines weiteren Garproduktes. Ein weiteres Beispiel einer Unterbrechung ist die Einbringung weitere Zutaten bzw. Soßen während eines Garprozesses durch Definition eines Meldeschrittes, bei der die Türe geöffnet werden muss).

Falls bestimmt wird, dass es während des Garprozesses der ausgesuchten Garprodukte zu keiner Unterbrechung in den kritischen Garzustände kommen kann, wird die Beschickung des Gargerätes mit den ausgesuchten Garprodukten freigegeben, wobei nach vollendeter Beschickung der bzw. die jeweiligen Garprozesse in Gang gesetzt werden können.

Anders ausgedrückt bedeutet dies, dass bei der Feststellung einer Unterbrechung eine Beschickung von vorneherein als unzulässig angezeigt oder beispielsweise durch das Sperren der Garraumtür von vorneherein verhindert werden kann.

Alternativ wäre es möglich, dass für den Fall einer willkürlichen Beschickung trotz einer Anzeige, dass eine Beschickung aufgrund einer Unterbrechung der kritischen Garzustände unzulässig ist, verhindert wird, dass der bzw. die Garprozesse gestartet werden, wobei es bevorzugter Weise in diesem Falle möglich ist, dass die unzulässige Beschickung einer Überwachungsstelle kund getan wird, um gegebenenfalls weitere Gegenmaßnahmen ergreifen zu können.

Die Ausführungsform des erfindungsgemäßen Verfahrens gemäß Anspruch 1 umfasst den Verfahrensschritt des Bestimmens, ob bereits eine Beschickung des Gargeräts mit Garprodukten vorliegt.

In diesem Falle kann eine Auswahl zumindest eines oder mehrerer weiterer noch zu beschickender Garprodukte erfolgen, die im Vergleich zu einem Zeitpunkt der Beschickung mit den ersten Gargütern zu einem späteren Zeitpunkt erfolgen soll.

In einem weiteren Verfahrensschritt wird hierzu bestimmt, ob sich eine Unterbrechung des bzw. der kritischen Garzustände des bzw. der bereits im Garraum befindlichen Gargüter mit den kritischen Garzuständen des bzw. der weiteren nachzubeschickenden Garprodukte ergibt.

Nur für den Fall, dass dieser Bestimmungsschritt ergibt, dass es zu keiner Unterbrechung bzw. keiner Überlappung kommt, wird die Nachbeschickung freigegeben.

Überlappen kann erlaubt sein, wenn Entnahmezeitpunkt eines der Garprodukte nicht innerhalb eines anderen kritischen Bereiches liegt. Eine Überlappung ist dann problematisch, wenn die kritischen Bereiche am Ende des Garverlaufes vorliegen und somit vor einer Entnahme abgeschlossen wurden! Beispiel: Garprodukt 1 besitzt seine kritische Phase von Minute 1 bis Minute 2 innerhalb des Rezeptes, welches 5 Minuten gesamt dauert. Garprodukt 2 besitzt seine kritische Phase von Minuten 1:30 bis 2:30 innerhalbes des Rezeptes, welches 6 Minuten gesamt dauert. Diese beiden Produkte können miteinander gestartet werden. Die kritischen Phasen überlappen sich zwar, aber es gibt bzw. es erfolgt keine Entnahme bzw. verallgemeinert eine Türöffnung, da diese in den Mitten der Rezepte liegen. Kritisch wird es, falls ein Produkt 3 parallel zu 1 und 2 gegart wird und dessen Garzeit nur 1:45 dauert. Dessen Entnahme fällt sowohl in den kritischen Bereich von Garprodukt 1 und Garprodukt 2. Eine solche Konstellation wäre unzulässig.

Ebenso sind Konstellationen unzulässig, bei denen 2 unterschiedliche Garprodukte miteinander gestartet werden, wobei eines der beiden (ohne eigenen kritischen Bereich - somit ohne jegliche Überlappung!) im kritischen Bereich des anderen endet. Hier hat nur eines der Produkte einen kritischen Bereich, dieser wird aber von der Entnahme des anderen, welches selbst keinen kritischen Bereich hat, unterbrochen.

Auch bei dieser besonders bevorzugten Ausführungsform ist es möglich, für den Fall einer unzulässigen willkürlichen Nachbeschickung den Start des Garprogrammes zu verhindern oder den Zugang zum Garraum durch Sperren der Garraumtür zu verhindern. Auch bei dieser Ausführung ist eine Meldung an eine Überwachungsstelle denkbar.

Bei der Bestimmung, ob eine Unterbrechung kritischer Garzustände vorliegt oder ob keine Unterbrechung vorliegt, können bei den zuvor beschriebenen zwei besonders bevorzugten Ausführungsformen des erfindungsgemäßen Verfahrens folgende Parameter berücksichtigt werden:
- Garproduktart,
- Garproduktmenge,
- Zeitverschiebung zwischen dem Zeitpunkt der Erstbeschickung und der Nachbeschickung,
- Kompensationswerte, wie zum Beispiel Türkompensation, Garzeitverlängerung,
- Garplatzposition, insbesondere Garplatzebene im Garraum des Gargerätes,
- Zeitpunkte der Entnahmen,
- Zeitpunkte von Meldeschritten mit Benutzerinteraktionen (Türöffnung!), und
- Lüftergeschwindigkeit.

Die Erfindung betrifft ferner ein Gargerät, das insbesondere als gewerbliches Gargerät ausgebildet ist, und dass zur Durchführung des Verfahrens gemäß Anspruch 1 oder Anspruch 2 eingerichtet ist.

Das erfindungsgemäße Gargerät weist einen Garraum auf, der mittels einer Garraumtür öffen- und verschließbar ist und in dem, beispielsweise auf übereinander angeordneten Ebenen auf Gargutträgern Garprodukte eingebracht werden können. Das erfindungsgemäße Gargerät weist natürlich auch sämtliche andere übliche Komponenten, wie Heizer, Lüfterrad, Reinigungsanlage usw. auf, die jedoch zur Erläuterung der erfindungsgemäßen Prinzipien nicht im Einzelnen beschrieben werden müssen.

Das erfindungsgemäße Gargerät kann optional zudem eine Erfassungseinrichtung umfassen, wie beispielsweise einen Produktscanner in Form einer Kamera oder sonstiger geeigneter Sensoren, um zu garende Produkte erfassen zu können, die in den Garraum eingebracht werden.

Ferner kann das erfindungsgemäße Gargerät eine Steuereinrichtung und eine Eingabeeinrichtung mit einem Display umfassen, um den kritischen Garzustand zumindest eines der zu garenden Produkte automatisch und/oder manuell und/oder teilmanuell bestimmen zu können bzw. diesen kritischen Garzustand einzugeben, wobei die Steuereinrichtung mit der Erfassungseinrichtung in Wirkverbindung/Signalverbindung stehen kann. Schließlich weist das erfindungsgemäße Gargerät eine Anzeigeeinrichtung auf, mit der der kritische Garzustand und seine Dauer angezeigt werden kann, wobei diese Anzeigeeinrichtung ein optionales Merkmal ist, also nicht unbedingt vorgesehen sein muss. Die Anzeigeeinrichtung kann ein visuelles Anzeigesignal, ein akustisches Anzeigesignal oder sowohl ein visuelles als auch ein akustisches Anzeigesignal ausgeben und bei einer besonders bevorzugten Ausführungsform dazu eingerichtet sein, eine eingeschränkte Produkt-Auswahlmöglichkeit darzustellen.

Bei einer weiteren besonders bevorzugten Ausführungsform kann die Steuereinrichtung mit einer Garraum-Sperrvorrichtung in Wirkverbindung/Signalverbindung stehen, die die Öffnung der Garraumtür für die Dauer des kritischen Garzustandes blockiert. Eine derartige Garraum-Sperrvorrichtung kann beispielsweise ein ein- und ausfahrbarer Türriegel sein, der beispielsweise motorisch in die Sperrstellung der Garraumtür verfahren wird, wenn der kritische Garzustand beginnt und diese Sperrstellung wieder freigibt, wenn bestimmt wird, dass die Dauer des kritischen Garzustands abgelaufen ist.

Dieser kritische Garzustand kann, wie zuvor erläutert, beispielsweise von einer Bedienperson einfach aufgrund des Wissens um eine Existenz eines derartigen kritischen Garzustands zu Beginn eines Garprozesses manuell im Gargerät eingegeben werden, und zwar hinsichtlich seines Beginns und seiner Dauer.

Alternativ ist es möglich, bei Bekanntsein derartiger kritischer Garzustände, die entsprechenden Garprogramme/Kochrezepte inklusive Berücksichtigung eines derartigen kritischen Garzustands oder auch einer Mehrzahl derartiger kritischer Garzustände während des Ablaufs eines Garprogramms zu programmieren. Sollte es mehrere kritische Garzustände während des Ablaufs eines Garprogramms geben, könnten diese natürlich vom Prinzip her auch manuell von einer Bedienperson vor dem Start und/oder während des Programmablaufs des jeweiligen Garprogramms eingegeben werden.

Alternativ können vom Hersteller bereits entsprechende kritische Garzustände in der Garprogrammsammlung (Kochbuch) hinterlegt werden.

Ebenfalls ist es denkbar, bei Feststellung von Unterbrechungen in kritischen Bereichen von Garprodukten die eingegebene Garprodukt-Zusammenstellung vom Gerät manuell vom Benutzer oder automatisch vom Gargerät optimieren zu lassen, um die vorliegenden Unterbrechungen zu vermeiden. Eine Optimierung könnte beispielsweise vorsehen, dass ein Garprodukt erst etwas später hinzugefügt werden soll (der Benutzer wird dann akustisch oder optisch darauf hingewiesen) um beispielsweise eine Verschiebung einer Unterbrechung (z.B. durch eine Türöffnung zur Entnahme am Garprozessende eines Produktes) zu erreichen.

Somit würde zwar ein Produkt erst etwas später gestartet werden, dies aber keine Unterbrechung durch Entnahme in einem kritischen Bereich zur Folge haben und somit die Konstellation erst ermöglichen. Als weiteres Beispiel hierfür sei aufgeführt, dass auch ein unkritischer Bereich eines Garprozesses optimiert/verlängert werden kann, um den kritischen Bereich weiter nach hinten (hinter eine Unterbrechung) zu verschieben, um einen Start der Garprodukt-Zusammenstellung zu ermöglichen. Ferner kann eine Entnahme des Produktes durch Türöffnung und somit eine Unterbrechung verzögert werden (hinter einen kritischen Bereich), um einen Start der Garprodukt-Zusammenstellung zu ermöglichen. Die optimierten bzw. automatisch vom Gargerät ermittelten Möglichkeiten zur Vermeidung von Unterbrechungen zum Start von Garprodukt-Zusammenstellung könnte dem Benutzer vor Durchführung erst angezeigt und zur Bestätigung durch den Benutzers angeboten werden.

Weitere Einzelheiten, Vorteile und Merkmale der vorliegenden Erfindung ergeben sich aus nachfolgender Beschreibung eines Ausführungsbeispiels anhand der Zeichnung.
- Fig. 1: der Zeichnung zeigt eine schematisch stark vereinfachte Darstellung eines erfindungsgemäßen Gargeräts,
- Fig. 2: eine schematisch stark vereinfachte Garprogramm/Garprodukt-Auswahl,
- Fig. 3: einen schematisch stark vereinfachten Belegungsplan im Garraum eines Gargeräts, und
- Fig. 4: eine zeichnerische Darstellung einer Unterbrechungsbestimmung kritischer Garzustände.

Dementsprechend zeigt die Figur ein Gargerät 1, das ein Gehäuse 4 aufweist, in dem ein Garraum 2 angeordnet ist, der über eine öffen- und schließbare Garraumtür 3 geöffnet oder geschlossen werden kann. Wie eingangs erläutert, weist das erfindungsgemäße Gargerät 1 natürlich alle sonstigen nötigen Komponenten, wie Luftkanal, Heizung, Reinigungsvorrichtung, usw. auf, die jedoch für die Erläuterungen der Prinzipien vorliegender Erfindung nicht beschrieben werden müssen.

Im Garraum 2 kann ein Produktträger T angeordnet werden, auf dem ein zu garendes Garprodukt GP angeordnet werden kann. Üblicherweise ist eine Mehrzahl derartiger Träger T vorgesehen, die in übereinander angeordneten Ebenen in den Garraum 2 eingeschoben werden können und die jeweils Garprodukte oder auch eine Mehrzahl von Garprodukten aufnehmen können.

Das Garprodukt GP kann, wie ebenfalls eingangs erläutert, einen kritischen Garzustand kG aufweisen, der eingehalten werden muss, um die perfekte Zubereitung des Garprodukts GP sicherzustellen.

Hierfür weist das erfindungsgemäße Gargerät 1 optional eine Erfassungseinrichtung 5 auf, die beispielsweise ein Produktscanner in Form einer Kamera oder eines ansonsten geeigneten Sensors sein kann, um zu ermitteln, welche Art von Garprodukt GP in den Garraum 2 eingebracht wird. Der Produktscanner 5 steht mit einer Steuereinrichtung 6 über eine strichliert symbolisierte Wirkverbindung/Signalverbindung SL1 in Verbindung, um es bei einer besonders bevorzugten Ausführungsform möglich zu machen, das eingangs erläuterte Verfahren insbesondere vollautomatisch durchzuführen. Ferner ist es natürlich der Bedienperson möglich, die Eingabe/Auswahl des Garguts an der Eingabeeinrichtung 8 manuell durchzuführen.

Das Gargerät 1 weist ferner eine Anzeigeeinrichtung 7 sowie eine Eingabeeinrichtung 8 auf.

Die Steuereinrichtung 6 steht über eine weitere Wirkverbindung bzw. Signalverbindungsleitung SL2 mit einer optionalen Garraum-Sperrvorrichtung 9 in Verbindung, die einen ein- und ausfahrbaren Türriegel 10 aufweist. In der Figur ist aufgrund der Anzeige des kritischen Garzustandes kG: 3 Minuten dieser Riegel 10 in die Sperrstellung überführt, da die Anzeigeeinrichtung 7 den kritischen Garzustand anzeigt und dementsprechend verhindert werden muss, dass dieser kritische Garzustand kG unterbrochen wird. Dementsprechend sperrt der Riegel 10 die Garraumtür 3, so dass selbst bei einer Missachtung der Anzeige kG: 3 Minuten auf der Anzeigeeinrichtung 7 eine willkürliche Unterbrechung des kritischen Garzustandes kG maschinell verhindert werden kann.

Endet der kritische Garzustand kG, wird der Riegel 10 eingefahren, so dass die Garraumtür 3 freigegeben und entsprechend geöffnet werden kann, um das fertig zubereitete Garprodukt GP aus dem Garraum 2 entnehmen zu können.

Wie eingangs ebenfalls erläutert, können auf der Anzeigeeinrichtung 7 natürlich weitere Anzeigen erfolgen, wie beispielsweise eine Produktfolge, die nach der Beendigung des kritischen Garzustandes kG in den Garraum 2 überführt werden können.

In Extremsituationen ist es erfindungsgemäß ferner möglich, dass eine Bedienperson autorisiert wird, in diesen Extremsituationen die Sperrung eines kritischen Garzustandes zu überspringen, beispielsweise wenn eine Unterbrechung eines kritischen Garzustandes weniger schädlich ist, als wenn eine Nachbeschickung mit weiteren Garprodukten verhindert würde. Hierbei kann vorgesehen werden, dass der Bedienperson ein Warnhinweis vom Gargerät ausgegeben wird, die Bedienperson jedoch dennoch die Möglichkeit hätte, das Gargerät, beispielsweise in zeitlich kritischen Situationen, durch Beschickung mit weiteren Garprodukten zu nützen.

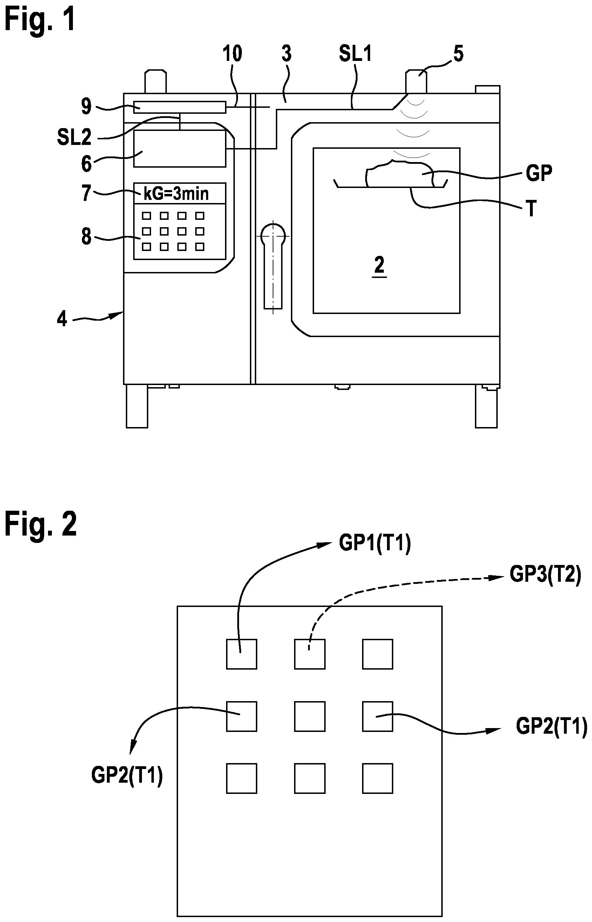

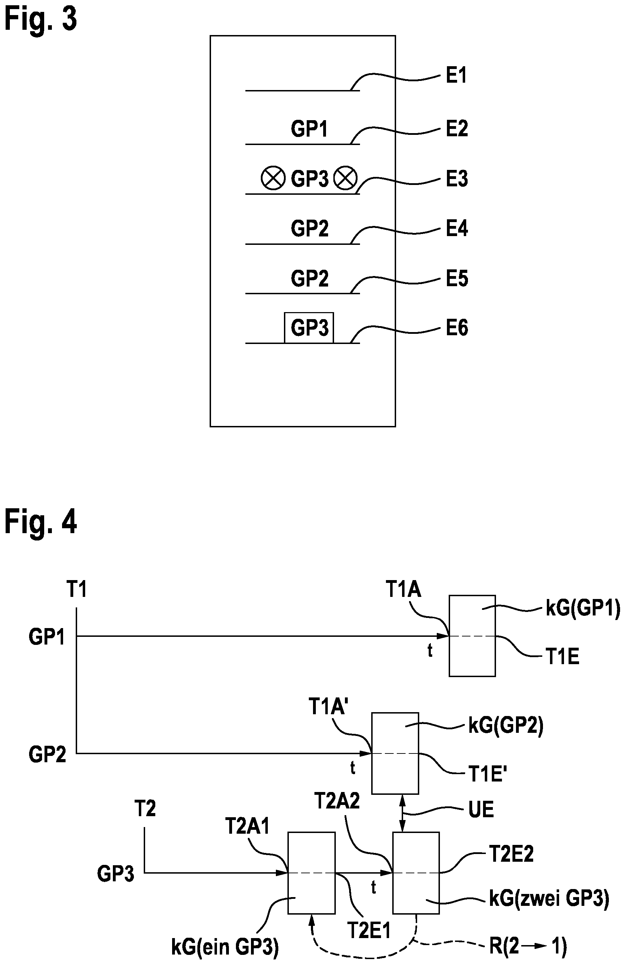

Die Fig. 2 bis 4 zeigen in schematisch stark vereinfachter Art und Weise in Fig. 2 eine Garprogramm/Garprodukt-Auswahl, in Fig. 3 einen Belegungsplan und in Fig. 4 eine zeichnerische Darstellung der Bestimmung von Unterbrechungen kritischer Garzustände.

Hierfür wird rein beispielhaft in Fig. 2 in einem ersten Verfahrensschritt, in dem noch keinerlei Garprodukt im Garraum des Gargerätes angeordnet ist, eine Auswahl von Garprodukten bzw. Garprogrammen vorgenommen, die zu einem ersten Zeitpunkt T1 in den Garraum eines Gargerätes eingebracht werden sollen. Im Beispielsfalle wird ein Garprodukt GP1 und zwei Garprodukte GP2 für diese Beschickung zum Zeitpunkt T1 ausgewählt.

Manuell oder vollautomatisch wird ferner die Belegung des Garraums entsprechend dem Belegungsplan 6 der Fig. 3 eingegeben oder vorgeschlagen. Im Beispielsfalle zeigt der Belegungsplan 6 übereinander angeordnete Gargutebenen E1 bis E6. Für das hier erläuterte Beispiel wird im Belegungsplan vorgeschlagen oder von der Bedienperson ausgewählt, dass das Garprodukt GP1 der Gargutebene E2 zugeordnet wird, während die Garprodukte GP2 den Gargutebenen E4 bzw. E5 zugeordnet werden. Es ist zu betonen, dass Fig. 3 nur den Belegungsplan des Garraums zeigt, also die aus Fig. 3 entnehmbare Anordnung der Garprodukte GP1 und GP2 auf den Ebenen E2, E4 bzw. E5 noch kein Beschicken des Garraums darstellt.

Vielmehr soll vor dieser Beschickung durch die Fig. 4 entnehmbare Unterbrechungsbestimmung ermittelt werden, ob die Gargutauswahl (einmal GP1/zweimal GP2) und die Zuordnung im Belegungsplan gemäß Fig. 3 zulässig ist.

Hierfür wird ausgehend vom geplanten Beschickungszeitpunkt T1 auf dem Zeitstrahl ermittelt, wann der kritische Garzustand kG des Garproduktes GP1 beginnt (T1A) und wann er endet (T1E).

Eine entsprechende Bestimmung erfolgt für die Garprodukte GP2, was durch die Zeitpunkte T1A' und T1E' symbolisiert ist. Fig. 4 verdeutlicht hierbei, dass es bei dem ausgewählten Beispiel nicht zu einer Unterbrechung der kritischen Garzustände kG(GP1) und kG(GP2) kommt. Dementsprechend ist eine Beschickung zulässig und die Garprodukte GP1 und GP2 können im Garraum auf den Ebenen E2, E4 und E5 angeordnet werden.

Dementsprechend kann auch im Gargerät nunmehr der Garprozess gestartet werden.

Beim Beispiel gemäß den Fig. 2 bis 4 soll nunmehr dargestellt werden, wie verfahren wird, wenn nach der Beschickung zum Zeitpunkt T1 eine Nachbeschickung zu einem späteren Zeitpunkt T2 (beispielsweise 5 Minuten) vorgegangen wird.

Für diesen Beispielsfall ist gemäß Fig. 2 die Auswahl eines weiteren Garproduktes/Garprogramms GP3 zum Zeitpunkt T2 unterstellt. Gemäß dem Belegungsplan der Fig. 3 wird deutlich, dass zwei Garprodukte GP3 zum Zeitpunkt T2 im Garraum angeordnet werden sollen, wozu der Belegungsplan in diesem Beispiel die Ebenen E3 und E6 ermittelt oder diese von der Bedienperson eingegeben werden.

Gemäß der Unterbrechungsbestimmung der Fig. 4 wird nunmehr der kritische Garzustand kG für zwei nachzubeschickende Garprodukte GP3 bestimmt. Dieser kritische Garzustand kG(zwei GP3) beginnt bei dem gewählten Beispiel zum Zeitpunkt T2A2 und endet zum Zeitpunkt T2E2. Die zeichnerische Darstellung der Fig. 4 verdeutlich hierbei, dass es beim Beschicken mit zwei Garprodukten GP3 zu einer Unterbrechung UE im kritischen Bereich des GP3 durch Entnahme des Produktes GP2 kommen kann/würde, so dass diese Beschickung unzulässig ist. Fig. 4 unterstellt ferner eine Reduktion R(2→1) von zwei Garprodukten GP3 auf ein Garprodukt GP3 und somit der Gesamtlaufzeit von GP3. Der kritische Garzustand kG(ein GP3) würde gemäß dem Beispiel der Fig. 4 zum Zeitpunkt T2A1 beginnen und zum Zeitpunkt T2E1 enden, wobei die zeichnerische Darstellung der Fig. 4 verdeutlicht, dass es bei der Auswahl lediglich eines Garproduktes GP3 nicht mehr zu einer Unterbrechung kommt, so dass die Nachbeschickung eines Garproduktes GP3 im Beispielsfalle auf der Gargutebene E6 zulässig ist, was in Fig. 3 dadurch symbolisiert ist, dass die Bezeichnung GP3 mit einem Block auf der Ebene E6 dargestellt ist, während das Garprodukt GP3 auf Ebene E3 durch zwei Kreise mit Kreuz die unzulässige Beschickung symbolisiert.

Der Grund für die erläuterte Unterbrechung UE bei Beschickung mit zwei Garprodukten GP kann an deren Menge, Größe, am Gewicht und dem zugeordneten Garprogramm liegen, so dass es, wie im gewählten Beispielsfall unterstellt, möglich wäre, durch Reduktion der Garproduktanzahl auf ein Garprodukt GP3 eine Verschiebung des zugeordneten kritischen Garzustandes kG(ein GP3) zu erreichen, die eine Unterbrechung vermeidet und mithin eine zulässige Beschickung darstellt.

Neben der voranstehenden schriftlichen Beschreibung der Erfindung wird zu deren ergänzender Offenbarung hiermit explizit auf die zeichnerische Darstellung der Erfindung in den Fig. 1 bis 4 der Zeichnung Bezug genommen.

### Bezugszeichenliste

- 1: Gargerät
- 2: Garraum
- 3: Garraumtür
- 4: Gehäuse
- 5: Erfassungseinrichtung (Produktscanner)
- 6: Steuereinrichtung
- 7: Anzeigeeinrichtung
- 8: Eingabeeinrichtung
- 9: Sperreinrichtung
- 10: Riegel/Garraumriegel
- T: Produktträger (tray)
- GP: Garprodukt
- kG: kritischer Garzustand
- SL1: Signalleitung
- SL2: Signalleitung
- UE: Unterbrechung
- E1 ― E6: Gargutebenen/Ebenen
- T1, T2: erster und späterer zweiter Zeitpunkt einer Beschickung

## Patentansprüche

1. Verfahren zum Garen von Garprodukten (GP1, GP2) mit zueinander passenden Gar-Charakteristika, das bei einer Erstbeschickung folgende Verfahrensschritte umfasst:
- Auswählen von in einen Garraum eines Gargerätes zu beschickenden Garprodukten (GP1, GP2),
- automatisches Bestimmen von kritischen Garzuständen (kG(GP1), kG(GP2)) von entweder Temperatur, Garzeit, Feuchte, Beschickungsmenge, Gar-Charakteristika, Gargutart, Gargutgröße, Gargutgewicht oder zu erreichender nötiger Kerntemperatur und der zum kritischen Garzustand gehörigen Zeitspanne der ausgewählten Garprodukte (GP1, GP2), durch das Gargerät;
- Beschickung des Garraums mit den Garprodukten (GP1, GP2) zu einem Beschickungszeitpunkt (T1) und Garen der Garprodukte (GP1, GP2);
- Bestimmen, ob bereits eine Beschickung des Garraums mit Garprodukten (GP1, GP2) vorliegt;
- Auswahl zumindest eines weiteren Garproduktes (GP3), das zu einem im Vergleich zum Beschickungszeitpunkt (T1) späteren Beschickungszeitpunkt (T2) nachbeschickt werden könnte,
- Bestimmung, ob sich eine Unterbrechung (UE) des kritischen Garzustandes des bzw. der bereits im Garraum befindlichen Gargüter (GP1, GP2) mit dem kritischen Garzustand (kG(GP3)) des nachzubeschickenden Garguts (GP3) ergibt, und
- Freigabe der Nachbeschickung, falls keine Unterbrechung (UE) ermittelt wird.

2. Verfahren nach Anspruch 1, **dadurch gekennzeichnet, dass** bei der Bestimmung des Vorhandenseins bzw. des Nicht-Vorhandenseins einer Unterbrechung (UE) folgende Parameter berücksichtigt werden:
- Garproduktart,
- Garproduktmenge,
- Zeitspanne zwischen den Beschickungszeitpunkten (T1, T2),
- Garproduktplatz (E2, E3, E4, E5 bzw. E6),
- Kompensationswerte, wie insbesondere Türkompensation und Garzeitverlängerung,
- Zeitpunkte der Entnahmen,
- Zeitpunkte von Meldeschritten mit Benutzerinteraktionen (Türöffnung!), und
- Lüftergeschwindigkeit.

3. Gargerät (1), insbesondere gewerbliches Gargerät, das dazu eingerichtet ist, das Verfahren nach Anspruch 1 oder 2 auszuführen:
- mit einem Garraum (2), der mittels einer Garraumtür (3) öffen- und verschließbar ist,
- mit einer Anzeigeeinrichtung (7) zur Anzeige des kritischen Garzustandes (kG) und seiner Dauer, und
- mit einer Produkterfassungs-Einrichtung (5) zur Erfassung von zu garenden Garprodukten (GP), die mit einer Steuereinrichtung (6) zur Bestimmung eines kritischen Garzustandes (kG) zumindest eines der gescannten zu garenden Produkte und zur vollautomatischen Durchführung des Verfahrens gemäß Anspruch 1 in Wirkverbindung (SL1) steht.

4. Gargerät nach Anspruch 3, **dadurch gekennzeichnet, dass** die Anzeigeeinrichtung (7) ein visuelles Anzeigesignal ausgibt.

5. Gargerät nach Anspruch 3 oder 4, **dadurch gekennzeichnet, dass** die Anzeigeeinrichtung (7) ein akustisches Anzeigesignal ausgibt.

6. Gargerät nach einem der Ansprüche 3 bis 5, **dadurch gekennzeichnet, dass** die Anzeigeeinrichtung (7) und/oder eine Eingabeeinrichtung (8) eine eingeschränkte Garprodukt-Auswahlmöglichkeit darstellt.

7. Gargerät nach einem der Ansprüche 3 bis 6, **dadurch gekennzeichnet, dass** die Steuereinrichtung (6) mit einer Garraum-Sperrvorrichtung (9) in Wirkverbindung (SL2) steht, die die Öffnung der Garraumtür (3) für die Dauer des kritischen Garzustandes (kG) blockiert.

## Claims

1. Method for cooking of cooking products (GP1, GP2) with cooking characteristics matching each other, which includes the following method steps for an initial load:
- selecting of cooking products (GP1, GP2) to be loaded into a cooking chamber of a cooking device,
- automatic determining of critical cooking states (kG (GP1), kG (GP2)) of either temperature, cooking time, humidity, load quantity, cooking characteristics, type of food to be cooked, size of food to be cooked, weight of food to be cooked or necessary core temperature to be reached and the time period belonging to the critical cooking state of the selected cooking products (GP1, GP2), by the cooking device;
- loading the cooking chamber with said cooking products (GP1, GP2) at a loading time (T1) and cooking the cooking products (GP1, GP2);
- determining whether the cooking chamber has already been loaded with cooking products (GP1, GP2);
- selection of at least one further cooking product (GP3) that could be re-loaded at a later loading time (T2) compared to the loading time (T1),
- determination whether there is an interruption (UE) between the critical cooking state of the cooking product(s) (GP1, GP2) already in the cooking chamber and the critical cooking state (kG (GP3)) of the cooking product (GP3) to be reloaded, and
- release of reloading if no interruption (UE) is determined.

2. Method according to claim 1, **characterized in that** when determining the presence or absence of an interruption (UE), the following parameters are taken into account:
- type of cooking product,
- amount of cooking product,
- time period between loading times (T1, T2),
- cooking product location (E2, E3, E4, E5 or E6),
- compensation values, such as in particular door compensation and cooking time extension,
- timings of removals,
- timings of reporting steps with user interactions (door opening!), and
- fan speed.

3. Cooking device (1), in particular a commercial cooking device, which is set up to execute the method according to claim 1 or 2:
- with a cooking chamber (2) which can be opened and closed by means of a cooking chamber door (3),
- with a display device (7) for displaying the critical cooking state (kG) and its duration, and
- with a product detection device (5) for detecting cooking products (GP) to be cooked, which is in operative connection (SL1) to a control device (6) for determining a critical cooking state (kG) of at least one of the scanned products to be cooked and for fully automatic execution of the method according to claim 1.

4. Cooking device according to claim 3, **characterized in that** said display device (7) outputs a visual display signal.

5. Cooking device according to claim 3 or 4, **characterized in that** said display device (7) outputs an acoustic display signal.

6. Cooking device according to any of claims 3 to 5, **characterized in that** said display device (7) and / or an input device (8) represents a restricted cooking product selection option.

7. Cooking device according to any of claims 3 to 6, **characterized in that** the control device (6) is in operative connection (SL2) to a cooking chamber locking device (9), which blocks the opening of the cooking chamber door (3) for the duration of the critical cooking state (kG).

## Revendications

1. Procédé de cuisson de produits à cuire (GP1, GP2) avec des caractéristiques de cuisson adaptées les unes par rapport aux autres, qui comprend des étapes de procédé suivantes lors d'un premier chargement :
- la sélection de produits à cuire (GP1, GP2) à charger dans un espace de cuisson d'un appareil de cuisson,
- la détermination automatique d'états de cuisson critiques (kG(GP1), kG(GP2)), de soit la température, le temps de cuisson, l'humidité, la quantité de chargement, les caractéristiques de cuisson, le type de produit à cuire, la taille de produit à cuire, le poids de produit à cuire soit la température à cœur nécessaire à atteindre et l'intervalle de temps, associé à l'état de cuisson critique, des produits à cuire (GP1, GP2) sélectionnés, par l'appareil de cuisson ;
- le chargement de l'espace de cuisson avec les produits de cuisson (GP1, GP2) à un moment de chargement (T1) et la cuisson des produits à cuire (GP1, GP2) ;
- la détermination pour savoir si un chargement de l'espace de cuisson est déjà présent avec des produits de cuisson (GP1, GP2) ;
- la sélection d'au moins un autre produit de cuisson (GP3), qui peut être chargé ultérieurement à un moment de chargement ultérieur (T2) en comparaison avec le moment de chargement (T1),
- la détermination pour savoir s'il découle une interruption (UE) de l'état de cuisson critique du ou des produits à cuire (GP1, GP2) se trouvant déjà dans l'espace de cuisson avec l'état de cuisson critique (kG(GP3)) du produit à cuire à charger ultérieurement (GP3), et
- la validation du chargement ultérieur si aucune interruption (UE) n'est déterminée.

2. Procédé selon la revendication 1, **caractérisé en ce que** lors de la détermination de la présence ou de la non-présence d'une interruption (UE), des paramètres qui suivent sont pris en compte :
- type de produit à cuire,
- quantité de produits à cuire,
- laps de temps entre les moments de chargement (T1, T2),
- place de produit à cuire (E2, E3, E4, E5 ou E6),
- valeurs de compensation, telles qu'en particulier compensation de porte ou allongement du temps de cuisson,
- moments des enlèvements,
- moments d'étapes de notification avec des interactions d'utilisateur (ouverture de porte !), et
- vitesse de ventilateur.

3. Appareil de cuisson (1), en particulier appareil de cuisson industriel, qui est mis au point pour exécuter le procédé selon la revendication 1 ou 2 :
- avec un espace de cuisson (2), qui peut être ouvert et fermé au moyen d'une porte d'espace de cuisson (3),
- avec un dispositif d'affichage (7) pour afficher l'état de cuisson critique (kG) et sa durée, et
- avec un dispositif de détection de produit (5) pour détecter des produits à cuire (GP) à cuire, qui coopère (SL1) avec un dispositif de commande (6) pour déterminer un état de cuisson critique (kG) d'au moins un des produits à cuire scannés et pour mettre en œuvre totalement automatiquement le procédé selon la revendication 1.

4. Appareil de cuisson selon la revendication 3, **caractérisé en ce que** le dispositif d'affichage (7) émet un signal d'affichage visuel.

5. Appareil de cuisson selon la revendication 3 ou 4, **caractérisé en ce que** le dispositif d'affichage (7) émet un signal d'affichage acoustique.

6. Appareil de cuisson selon l'une quelconque des revendications 3 à 5, **caractérisé en ce que** le dispositif d'affichage (7) et/ou un dispositif d'entrée (8) constituent une possibilité de sélection de produit à cuire restreinte.

7. Appareil de cuisson selon l'une quelconque des revendications 3 à 6, **caractérisé en ce que** le dispositif de commande (6) coopère (SL2) avec un dispositif de blocage d'espace de cuisson (9), qui bloque l'ouverture de la porte d'espace de cuisson (3) pour la durée de l'état de cuisson critique (kG).
